# EUROPÄISCHE PATENTSCHRIFT

(11) **EP 0 819 373 B1**
(45) Veröffentlichungstag und Bekanntmachung des Hinweises auf die Patenterteilung: **07.03.2001**
(21) Anmeldenummer: 97110917.8
(22) Anmeldetag: 02.07.1997
(51) Int. Cl.: A01D 78/10, A01B 73/06

(54) **Landwirtschaftliche Arbeitsmaschine, insbesondere Vielkreisel-Heuwender**
Agricultural implement especially multiple rotor hay-turner
Machine de travail agricole notamment faneuse à plusieurs rotors

(30) Priorität: 16.07.1996 DE 19628619
(43) Veröffentlichungstag der Anmeldung: 21.01.1998
(73) Patentinhaber: CLAAS SAULGAU GMBH, D-88340 Saulgau (DE)
(72) Erfinder: Deni, Franz, 88340 Saulgau-Bogenweiler (DE)

(56) Entgegenhaltungen:
- DE-A- 19 525 344
- DE-U- 29 507 032
- GB-A- 2 021 913
- US-A- 5 488 996

## Beschreibung

Die Erfindung bezieht sich auf eine Arbeitsmaschine nach dem Gattungsbegriff des Patentanspruches 1. Dieser ist weitgehend abgeleitet aus der Offenbarung der nicht vorveröffentlichten DE-A-195 25 344. Aufgabe der Erfindung ist es, die Vorteile der Anwendung eines sogenannten Kopierrades bei landwirtschaftlichen Arbeitsmaschinen mit Zinkenkreiseln auch dann zu behalten, wenn die Zinkenkreisel von der Arbeits- in eine Transportstellung nach vorn in Fahrtrichtung verschwenkbar sind. Die Lösung der Aufgabe ist durch den Wortlaut des kennzeichnenden Teils des Patentanspruchs 1 umrissen. Vorteilhafte Ausgestaltungen des Erfindergedankens sind dem Wortlaut der Unteransprüche zu entnehmen.

Anhand der Zeichnungen sei die Erfindung beispielhaft erläutert. Es zeigen - sämtlich in schematischer Darstellung -:

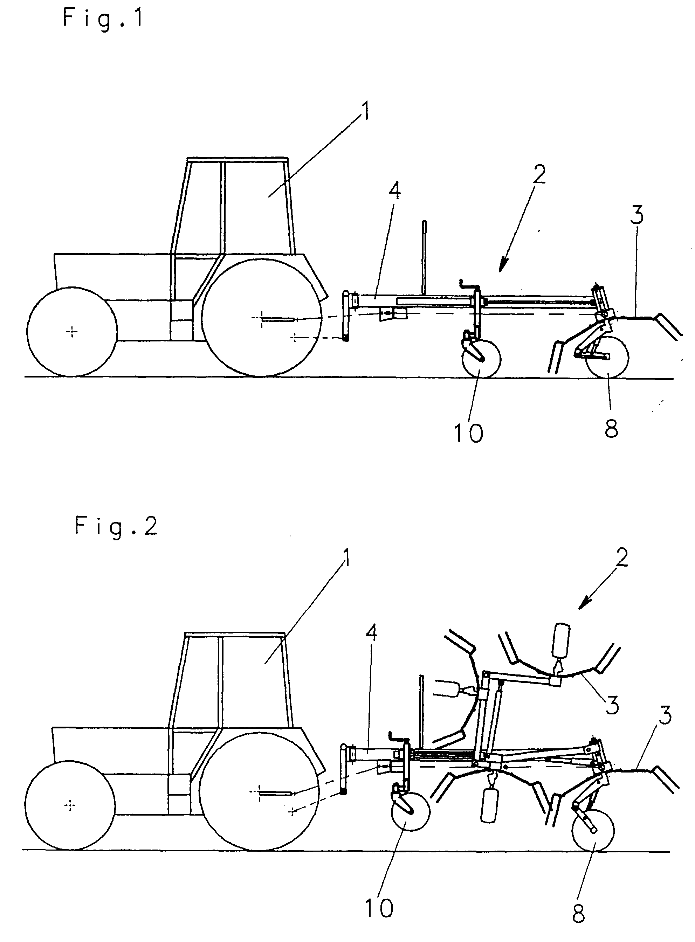

- Figur 1: die Seitenansicht eines schleppergezogenen Mehrkreisel-Wenders in dessen Arbeitsstellung;
- Figur 2: die Seitenansicht des Gespanns in Transportstellung des Wenders;

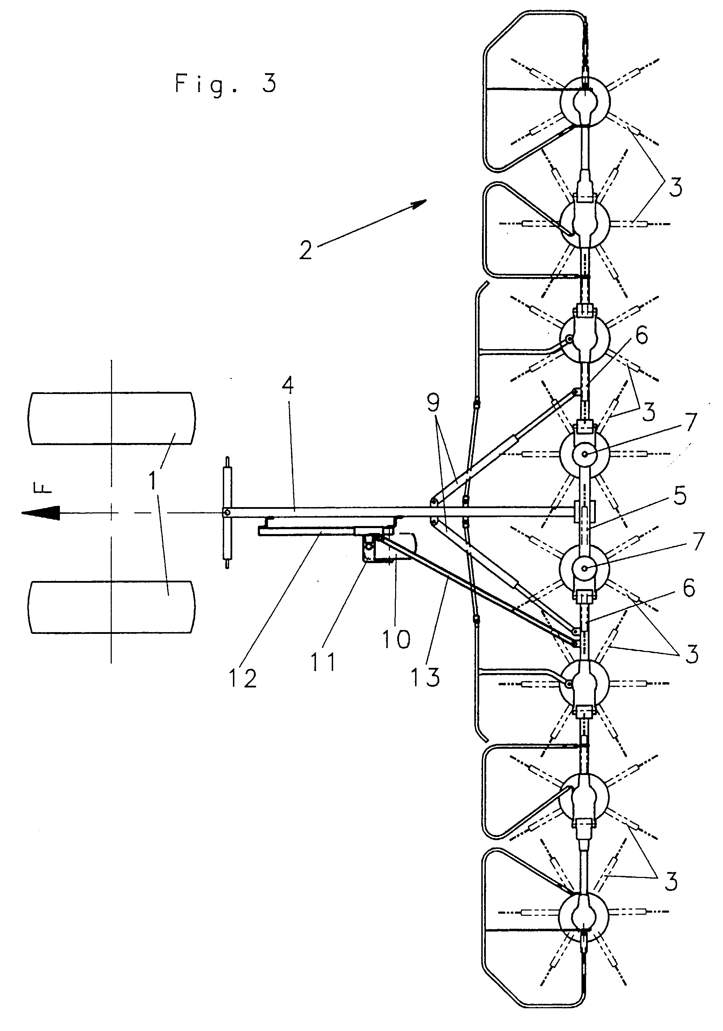

- Figur 3: eine Draufsicht auf das Gespann in Arbeitsstellung des Wenders;

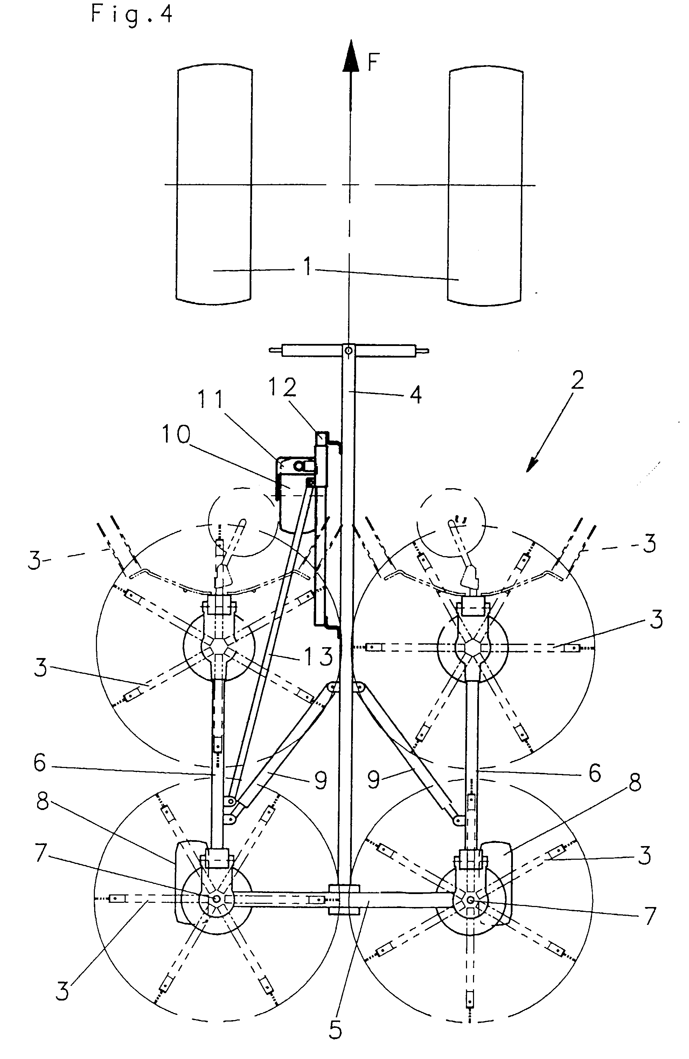

- Figur 4: eine Draufsicht auf das Gespann in Transportstellung des Wenders, und

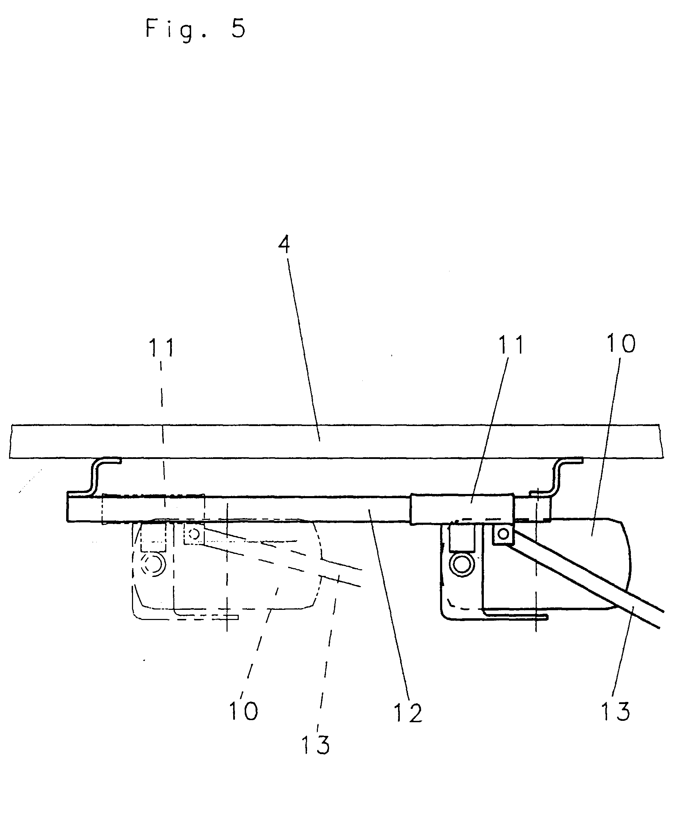

- Figur 5: eine Detail-Draufsicht auf die Anordnung eines den Zinkenkreiseln vorgeordneten Kopierrades in zwei Positionen.

Mit (1) ist ein Schlepper bezeichnet, der zum Antrieb und zur Fortbewegung eines angehängten Mehrkreisel-Wenders (2) bestimmt ist. Die Zinkenkreisel des Wenders (2) tragen das Bezugszeichen (3). Der Rahmen des Wenders wird gebildet durch einen Längsträger (4) und einen an dessen schlepperabgewandten Ende befestigten, vglw. kurzen Mittelrahmen (5). An letzerem sind ggf. in der Länge unterteilte, die Zinkenreisel (3) tragende Seitenarme (6) angelenkt, die um vertikale Schwenk- und Drehachsen (7) um ca. 90° nach vorn in Richtung zum Schlepper (1) verschwenkbar sind. Dabei können bei sehr großen Arbeitsbreiten Teilstücke der Seitenarme (6) mit zugehörigen Zinkenkreiseln (3) über entsprechende Gelenke zusätzlich nach oben geklappt werden. Unterhalb der Zinkenkreisel (3), vorzugsweise im mittleren Bereich der Maschine, sind Transporträder (8) angeordnet. Die Schwenkbewegung der Seitenarme (6) erfolgt über Hydraulikzylinder (9). Zur Sicherung des Bodenabstandes der Zinken der Zinkenkreisel (3) ist den Zinkenkreiseln ein Kopierrad (10) vorgeordnet, das an einer Gleitkufe (11) befestigt ist, die ihrerseits an einer mit dem Rahmenlängsträger (4) verbundenen Gleitschiene (12) längsverschieblich lagert. Auf diese Weise ist es möglich, einerseits den Bedürfnissen zu entsprechen, das Kopierrad in Arbeitsstellung der Zinkenkreisel (3) möglichst nahe zu den Zinkenkreiseln zu positionieren und andererseits beim Verschwenken der Zinkenkreisel (3) nach vorn deren Schwenkstellung nicht zu behindern. Die Längsverschiebung von Kopierrad (10) mit Gleitkufe (11) erfolgt selbsttätig in Abhängigkeit von der Schwenkbewegung der die Zinkenkreisel (3) tragenden Seitenarme (6) über eine Koppelstange (13), die einerseits mit der Gleitkufe (11) und andererseits mit einem dem Mittelrahmen (5) benachbarten Seitenarm (6) verbunden ist. Die Längsverschiebung von Kopierrad (10) und Gleitkufe (11) kann auch manuell oder über hydraulische oder elektrische Stellglieder erfolgen.

## Patentansprüche

1. Landwirtschaftliche Arbeitsmaschine mit mehreren Zinkenkreiseln, insbesondere Schwader oder Wender, die schleppergetrieben und von einer breiten Arbeitsstellung in eine schmale Transportstellung veränderbar ist, und die einen in Fahrtrichtung verlaufenden Rahmenlängsträger und einen quer dazu angeordneten Mittelrahmen aufweist, an den sich beidseitig mehrere schwenkbeweglich miteinander verbundene, die Zinkenkreisel tragenden Seitenarme anschließen, die um am Mittelrahmen angebrachte vertikale Schwenkachsen von der Arbeits- in die Transportstellung um etwa 90° nach vorn in Richtung des Rahmenlängsträgers, parallel zu diesem Träger, schwenkbar sind, dadurch gekennzeichnet, daß der Arbeitsmaschine (2) ein in Fahrtrichtung unmittelbar vor den Zinkenkreiseln (3), am Rahmenlängsträger (4) angeordnetes Kopierrad (10) zugeordnet ist, das längsbeweglich am Rahmenlängsträger (4) gelagert ist.

2. Arbeitsmaschine nach Anspruch 1, dadurch gekennzeichnet, daß das Kopierrad (10) in Abhängigkeit von der Schwenkbewegung der Zinkenkreisel (3) mit deren Seitentragarmen (6) selbsttätig längsbeweglich ist.

3. Arbeitsmaschine nach den Ansprüchen 1 und 2, dadurch gekennzeichnet, daß das Kopierrad (10) mit einer Gleitkufe (11) verbunden ist, die an einer parallel mit dem Rahmenlängsträger (4) verlaufenden und an diesem befestigten Gleitschiene (12) längsverschieblich gelagert ist.

4. Arbeitsmaschine nach den Ansprüchen 1 bis 3, dadurch gekennzeichnet, daß das Kopierrad (10) mit zugehöriger Gleitkufe (11) über eine Koppelstange (13) mit einem der am Mittelrahmen (5) schwenkbar gelagerten Seitenarme (6) verbunden ist.

## Claims

1. An agricultural working machine having a plurality of rotary rakes, in particular a windrower or tedder, which is tractor-driven and variable from a wide working position into a narrow transport position and which has a longitudinal frame bearer extending in the direction of travel and a central frame which is arranged transversely with respect thereto and which is adjoined at both sides by a plurality of side arms which are pivotably movably connected together and which carry the rotary rakes and which are pivotable parallel to the longitudinal frame bearer about vertical pivot axes disposed on the central frame from the working position into the transport position forwardly through about 90° in the direction of the longitudinal frame bearer, characterised in that associated with the working machine (2) is a jockey wheel (10) which is arranged in the direction of travel immediately in front of the rotary rakes (3) on the longitudinal frame bearer (4) and which is longitudinally movably mounted on the longitudinal frame bearer (4).

2. A working machine according to claim 1 characterised in that the jockey wheel (10) is automatically longitudinally movable in dependence on the pivotal movement of the rotary rakes (3) with the side support arms (6) thereof.

3. A working machine according to claims 1 and 2 characterised in that the jockey wheel (10) is connected to a skid (11) which is mounted longitudinally slidably on a slide rail (12) which extends parallel to the longitudinal frame bearer (4) and is secured thereto.

4. A working machine according to claims 1 to 3 characterised in that the jockey wheel (10) with associated skid (11) is connected by way of a coupling bar (13) to one of the side arms (6) which are pivotably mounted to the central frame (5).

## Revendications

1. Machine agricole comportant plusieurs toupies à dents, en particulier andaineuse ou faneuse, du type tractée, qui peut être amenée d'une position de travail déployée, large, dans une position de transport, étroite, comportant un longeron de châssis qui s'étend dans la direction de déplacement et un châssis intermédiaire, qui est disposé transversalement à celui-ci et de chaque côté duquel sont prévus plusieurs bras latéraux qui portent les toupies à dents, sont liés entre eux de manière à pouvoir pivoter ter et peuvent être amenés de la position de travail dans la position de transport, par pivotement d'environ 90° vers l'avant, en direction du longeron de châssis, parallèlement audit longeron, autour d'axes de pivotement disposés verticalement sur le châssis intermédiaire, caractérisée en ce qu'une roue de jauge (10) est associée à la machine agricole (2), laquelle roue de jauge est disposée sur le longeron de châssis (4), juste devant les toupies à dents (3), et est montée sur le longeron de châssis (4) avec possibilité de déplacement dans la direction longitudinale.

2. Machine agricole selon la revendication 1, caractérisée en ce que la roue de jauge (10) se déplace de manière automatique dans la direction longitudinale en fonction du mouvement de pivotement des toupies à dents (3) avec leurs bras-supports latéraux (6).

3. Machine agricole selon les revendications 1 et 2, caractérisée en ce que la roue de jauge (10) est liée à un patin (11) qui est monté avec possibilité de déplacement dans la direction longitudinale sur un rail de glissière (12) fixé au longeron de châssis (4), parallèlement à celui-ci.

4. Machine agricole selon les revendications 1 à 3, caractérisée en ce que la roue de jauge (10) avec son un patin (11) est liée par l'intermédiaire d'une barre de couplage (13) à l'un des bras latéraux (6) montés pivotants sur le châssis intermédiaire (5).
